(19) Europäisches Patentamt
European Patent Office
Office européen des brevets

(11) **EP 3 161 568 B1**

(12) **FASCICULE DE BREVET EUROPEEN**

(45) Date de publication et mention
de la délivrance du brevet:
**16.01.2019 Bulletin 2019/03**

(51) Int Cl.:
***G05B 23/02*** *(2006.01)*

(21) Numéro de dépôt: **15733842.7**

(22) Date de dépôt: **16.06.2015**

(86) Numéro de dépôt international:
**PCT/FR2015/051586**

(87) Numéro de publication internationale:
**WO 2015/197944 (30.12.2015 Gazette 2015/52)**

(54) **PROCÉDÉ DE SURVEILLANCE D'UNE DÉGRADATION D'UN DISPOSITIF EMBARQUÉ D'UN AÉRONEF INCLUANT LA DÉTERMINATION D'UN SEUIL DE COMPTAGE**

**VERFAHREN ZUR ÜBERWACHUNG EINER VERSCHLECHTERUNG EINER VORRICHTUNG AN BORD EINES FLUGZEUGS EINSCHLIESSLICH DER BESTIMMUNG EINES ZÄHLSCHWELLENWERTS**

**METHOD OF MONITORING A DEGRADATION OF A DEVICE ON BOARD AN AIRCRAFT INCLUDING THE DETERMINATION OF A COUNTING THRESHOLD**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2014 FR 1455921**

(43) Date de publication de la demande:
**03.05.2017 Bulletin 2017/18**

(73) Titulaire: **Safran Aircraft Engines**
**75015 Paris (FR)**

(72) Inventeurs:
• **MASSE, Jean-Rémi André**
**77550 Moissy-Cramayel Cedex (FR)**
• **LALONDE, Pierre Gérald**
**77550 Moissy-Cramayel Cedex (FR)**
• **HUMEAU, Aurore Fabienne Paule**
**31704 Blagnac Cedex (FR)**
• **ALIMARDANI, Armand Dariouche**
**31704 Blagnac Cedex (FR)**
• **FOIRET, Guilhem Alcide Auguste**
**77550 Moissy-Cramayel Cedex (FR)**

(74) Mandataire: **Gevers & Orès**
**41 avenue de Friedland**
**75008 Paris (FR)**

(56) Documents cités:
EP-A2- 2 075 474    WO-A1-2013/171427
WO-A2-2014/064396    US-A1- 2005 143 873
US-A1- 2007 028 219    US-A1- 2011 307 743
US-A1- 2013 024 179    US-B1- 8 700 550

• V Chandola ET AL: "Anomaly Detection for Discrete Sequences: A Survey", IEEE Transactions on Knowledge and Data Engineering, 1 janvier 2012 (2012-01-01), pages 823-839, XP055170010, New York DOI: 10.1109/TKDE.2010.235 Extrait de l'Internet: URL:http://ieeexplore.ieee.org/xpls/abs_all.jsp?arnumber=5645624 [extrait le 2015-02-17]

**Description**

**DOMAINE TECHNIQUE GENERAL ET ART ANTERIEUR**

La présente invention concerne le domaine de la surveillance d'une dégradation d'un dispositif embarqué d'un aéronef, notamment sur une turbomachine. Plus particulièrement, l'invention concerne des dispositifs tels que, par exemple, une chaîne de mesure, pour lequel un indicateur de santé est lié à l'apparition ou non d'événements.

Pour surveiller un dispositif embarqué, il est connu de former un indicateur qui est caractéristique d'une dégradation du dispositif embarqué. Cet indicateur est connu de l'homme du métier sous la dénomination de score d'anormalité. De manière classique, un score d'anormalité est formé à partir de mesures de paramètres physiques du dispositif embarqué tels que, par exemple, une position géométrique, un courant de commande, un angle d'ouverture, une température, etc. Le score d'anormalité est caractéristique du degré de dommage de la dégradation. De préférence, un score d'anormalité est formé à chaque vol de l'aéronef.

Pour déterminer si le dispositif embarqué est effectivement dégradé, le procédé de surveillance comporte une étape de comparaison d'un score d'anormalité obtenu pour un vol donné de l'aéronef à un seuil de décision et une étape d'émission d'une alarme en cas de dépassement du seuil de décision. Ainsi, en suivant l'évolution du score d'anormalité, on détecte si le degré de dégradation augmente et on peut anticiper le risque de panne du dispositif embarqué et améliorer la gestion des opérations de maintenance.

Le réglage du seuil de décision pour une dégradation donnée est crucial étant donné, d'une part, qu'un seuil de décision trop faible induit l'émission d'alarmes fréquentes alors que la dégradation n'est pas avérée (alarme fausse) et, d'autre part, qu'un seuil de décision trop élevé inhibe l'émission d'alarmes alors que la dégradation est avérée (non détection).

De manière classique, pour chaque dégradation que l'on souhaite détecter, on définit de manière empirique la valeur du seuil de décision. Afin d'assurer une sécurité maximale, la valeur des seuils de décision est généralement sous évaluée afin de minimiser le risque de non détection. Il en résulte que le nombre d'alarmes fausses demeure élevé ce qui présente un inconvénient pour les compagnies aériennes qui sont contraintes à mettre en oeuvre de manière fréquente une opération de maintenance alors que le dispositif aéronautique embarqué n'est pas dégradé. Pour éliminer cet inconvénient, les compagnies aériennes fixent aux fabricants de dispositifs embarqués des cahiers des charges imposant de limiter le risque d'erreur. Compte tenu de la précision exigée, toute définition empirique d'un seuil de décision pour un procédé de surveillance de pannes est alors proscrite.

La présente invention apporte une solution à ce besoin, et décrit un procédé de surveillance d'une dégradation d'un dispositif embarqué d'un aéronef, mise en oeuvre par un calculateur, selon la revendication 1.

La demande de brevet FR 1358593 apporte une amélioration à l'invention précédente en introduisant une stratégie de confirmation « k parmi n », pour laquelle une alarme n'est émise que s'il y a au moins k dépassements de seuil en n vols successifs.

Ce procédé permet de déterminer le seuil de décision de manière automatique avec une grande précision en fonction de la probabilité d'alarme Pa correspondant aux exigences des compagnies aériennes. Un tel procédé est fiable par comparaison aux procédés de l'art antérieur. Cela permet de détecter de manière précise toute dégradation d'un dispositif embarqué et d'anticiper toute panne de ce dernier lors de la surveillance.

Cependant, un tel procédé n'est en général pas applicable lorsque la distribution du score d'anomalies n'est pas continue mais discrète.

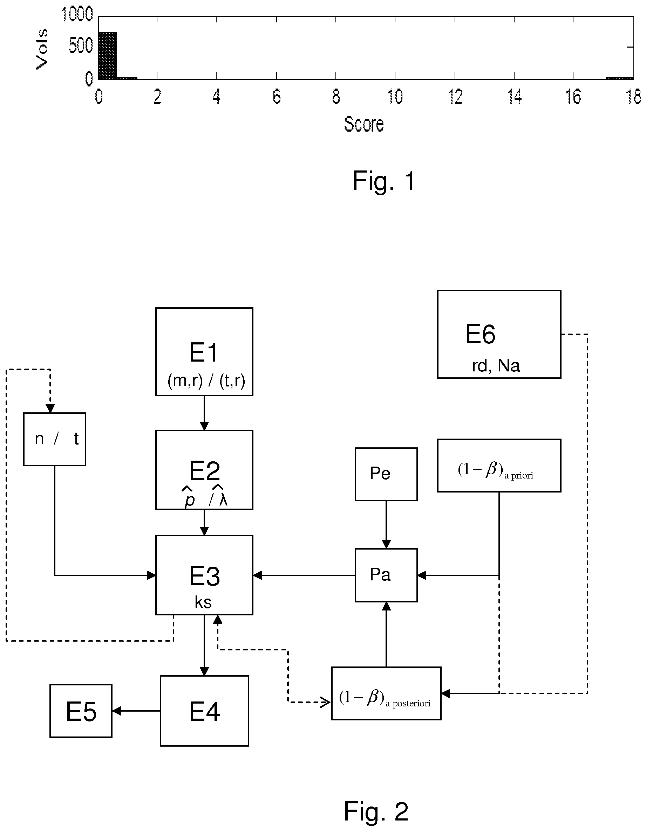

A titre d'exemple, on connaît, par la demande de brevet déposée en France le 15 septembre 2001 sous le numéro 2980266, de la société SNECMA, un système de surveillance d'une chaîne de mesure d'un turboréacteur pour lequel le score d'anormalité est défini par le comptage au cours d'incréments de temps successifs du nombre de transitions « indésirables » du mot de santé « OK » à un autre mot de santé indiquant un dysfonctionnement. Il arrive que ce comptage soit presque toujours nul. Dans l'exemple présenté en figure 1, sur un nombre total de 750 vols sans dégradation, un vol a eu une dégradation et un autre dix-huit, tous les autres vols n'ont eu aucune transition indésirable. Il n'est alors plus approprié d'ajuster une distribution continue à l'histogramme obtenu sur la figure 1 et d'en déduire un seuil pour le comptage, en adaptant les méthodes précédentes.

Il existe ainsi un besoin pour déterminer une stratégie de surveillance d'une dégradation d'un dispositif embarqué d'un aéronef à partir d'un comptage d'événements présentant un faible occurrence d'apparition permettant de déclencher automatiquement une alarme en respectant de manière fiable et précise une probabilité d'alarme Pa donnée.

L'invention propose une solution simple et efficace à ce problème.

**PRESENTATION GENERALE DE L'INVENTION**

L'invention propose à cet effet un procédé de surveillance d'une dégradation d'un dispositif embarqué d'un aéronef au cours de son fonctionnement, mis en oeuvre par un calculateur, le degré de la dégradation du dispositif embarqué étant défini par un score d'anormalité formé par le comptage d'occurrences d'anomalies constatées par un système de contrôle du dispositif au cours de son fonctionnement, le procédé de surveillance comprenant une étape de comparaison d'un score d'anormalité obtenu pour une séquence d'observation de longueur donnée à un seuil de décision ks et une étape d'émission d'une alarme en cas d'atteinte ou dépassement du seuil de décision ks, le seuil de décision ks étant déterminé automatiquement pour une probabilité d'alarme donnée Pa, correspondant à la probabilité qu'une alarme soit émise au cours du procédé de surveillance alors que le dispositif embarqué est sain, au moyen des étapes suivantes :

- une étape d'obtention d'un score d'anormalité sur au moins une séquence de référence correspondant à des vols de l'aéronef sans dégradation et de longueur égale à une pluralité de longueurs de séquences d'observation ;
- une étape d'ajustement d'une loi de probabilité discrète permettant de retrouver le score d'anormalité obtenu sur la séquence de référence;
- une étape de calcul du seuil de décision ks tel, qu'en appliquant la loi de probabilité discrète ajustée lors de l'étape précédente à une séquence d'observation ayant la longueur donnée, la probabilité qu'un score d'anomalie supérieur ou égal au seuil de décision (ks) se produise un nombre S de fois pour N séquences consécutives soit inférieure à une probabilité élémentaire Peac de dépassement de seuil évaluée à partir de la probabilité d'alarme donnée Pa, N et S pouvant être égaux à un.

De préférence, la probabilité élémentaire Peac de dépassement de seuil est évaluée à partir de la probabilité d'alarme donnée Pa par la formule :

$$\text{Peac} = B_{S,N-S+1}^{-1}\ (Pa)$$

dans laquelle N est le nombre de séquences d'observation, S le nombre de fois où le seuil ks aura été dépassé pour N séquences successives, et $B_{S,N-S+1}^{-1}$ la fonction de répartition eulérienne Béta inverse de paramètres S et N-S+1.

Autrement dit, la valeur du seuil ks est le nombre d'occurrences d'une anomalie au cours d'une séquence d'observation à partir duquel l'hypothèse qu'un dispositif sain, présentant une probabilité d'occurrence d'anomalie représentée par la loi de probabilité discrète qui a été ajustée sur la séquence de référence n'est pas tenable avec une probabilité plus grande que Pa, ou Peac. Donc, si le nombre d'occurrences d'anomalies sur une séquence d'observation atteint le seuil de décision ks, soit une fois, soit p fois dans une stratégie avec confirmation, on peut en conclure que le dispositif ne suit plus un comportement correspondant à un dispositif sans dégradation avec un risque de se tromper inférieur à Pa. Avec des lois de probabilités connues, il est possible de calculer ce seuil de décision ks en utilisant l'expression de leur loi de distribution inverse. Ce procédé est particulièrement avantageux lorsque la fiabilité du dispositif entraîne le fait que la détection d'anomalies correspond au comptage d'événements rares, lorsque l'identification d'une loi continue est impossible sur l'histogramme des comptages.

Selon un aspect préféré de l'invention, la loi de probabilité discrète utilisée représente un phénomène dont les occurrences ont une probabilité donnée par unité de temps, la deuxième étape correspondant à une estimation de la probabilité par unité de temps dans la loi de probabilité discrète pour retrouver le score d'anormalité obtenu sur la séquence de référence. Ladite loi de probabilité peut être une loi binomiale ou une loi de Poisson, paramétrée par la probabilité par unité de temps et une longueur de séquence.

Dans le cas précédent, l'estimation de la probabilité par unité de temps des occurrences d'anomalies pour le système sans dégradation dans la loi de probabilité discrète peut être égale à un majorant de cette probabilité par unité de temps avec une confiance donnée pour le score d'anormalité dans la séquence de référence. De préférence, l'estimation de la probabilité par unité de temps est égale au maximum de vraisemblance correspondant au score d'anormalité obtenu sur la séquence de référence.

Avantageusement, une séquence d'observation correspond à plusieurs vols successifs de l'aéronef.

Le procédé selon l'invention peut comprendre une étape de prédétermination de la longueur donnée pour les séquences d'observation. Plus la longueur de la séquence d'observation est élevée, plus le seuil de détection ks sera grand et mieux sera respectée la probabilité d'alarme Pa ou la probabilité élémentaire Peac. En revanche le phénomène de dégradation avant panne devra être d'autant plus lent pour être détecté à temps. Le choix de la longueur d'une séquence d'observation peut donc reposer sur des considérations opérationnelles de délai de dépose et de dynamique de dégradation physique jusqu'à panne.

Cette longueur de la séquence d'observation peut être avantageusement choisie de sorte que le seuil de décision (ks) soit compris entre trois et dix. Sur l'exemple présenté, la longueur de la séquence d'observation est de 60000 incréments de temps et la valeur du seuil de décision calculé par le procédé prend la valeur 6.

Selon un aspect préféré de l'invention, la probabilité d'alarme Pa est obtenue par la formule suivante :

$$Pa = \frac{Pe}{(1 - Pe)} \cdot (1 - \beta)_{\text{a priori}} \cdot \frac{Pd}{(1 - Pd)}$$

formule dans laquelle :

Pe correspond à la probabilité que le dispositif embarqué soit sain alors qu'une alarme est émise ;
Pd correspond à la probabilité d'une dégradation pour une séquence d'observation ; et
$(1-\beta)_{\text{a priori}}$ correspond à la probabilité de détection d'une dégradation a priori.

De manière avantageuse, on détermine la probabilité d'alarme Pa en fonction d'une probabilité d'erreur Pe qui correspond aux exigences pratiques des compagnies aériennes qui souhaitent diminuer le nombre d'étapes de maintenance inutiles des dispositifs embarqués.

De préférence encore, le procédé comporte :

- une étape de mise en oeuvre du procédé de surveillance d'une dégradation du dispositif embarqué, avec le seuil de décision (ks) préalablement déterminé, pour une pluralité de scores d'anormalité formés pour une pluralité de séquences d'observation avec dégradation pour en déduire une probabilité de détection d'une dégradation a posteriori $(1-\beta)_{\text{a posteriori}}$,
- une étape de détermination d'une nouvelle probabilité d'alarme Pa en fonction de la probabilité de détection d'une dégradation a posteriori $(1-\beta)_{\text{a posteriori}}$,
- une étape de détermination d'un nouveau seuil de décision (ks) affiné à partir de la nouvelle probabilité d'alarme.

Ces étapes permettent avantageusement d'affiner la valeur du seuil de décision de manière rapide et fiable.

## PRESENTATION DES FIGURES

L'invention sera mieux comprise à la lecture de la description qui va suivre, donnée uniquement à titre d'exemple, et se référant aux dessins annexés sur lesquels :

- la figure 1 représente la distribution de scores d'anormalité obtenus pour un dispositif de mesure embarqué d'un aéronef pour une pluralité de vols sans dégradation,
- la figure 2 est un diagramme schématique d'un procédé de surveillance comprenant des étapes de détermination automatique du seuil de décision selon l'invention ;
- la figure 3 est un diagramme schématique d'une variante du procédé de surveillance comprenant des étapes de détermination automatique du seuil de décision selon l'invention.

## DESCRIPTION D'UN OU PLUSIEURS MODES DE REALISATION ET DE MISE EN OEUVRE

La détermination automatique d'un seuil de décision va être présentée pour un procédé de surveillance d'une dégradation d'un dispositif embarqué d'un aéronef tel que connu de l'art antérieur, par exemple, par la demande de brevet sous le numéro 1358593 de la société SNECMA.

De manière connue, le degré de dégradation du dispositif embarqué est défini par un score d'anormalité obtenu par le comptage au cours de « tops horloge », déterminant des incréments unitaires réguliers de temps, d'un nombre de transitions indésirables d'un indicateur d'état du dispositif établi par le système de surveillance. Dans le cas décrit, l'état du dispositif peut prendre deux valeurs et peut donc être codé de manière binaire signalant l'occurrence éventuelle d'une anomalie. De manière préférée, le score d'anormalité est formé par un calculateur embarqué de l'aéronef et relié au dispositif embarqué par une liaison de communication.

Pour prendre en compte le fait que le fonctionnement du dispositif peut présenter des anomalies même lorsqu'il n'est pas dégradé, le procédé correspond, comme dans l'état de la technique, à une stratégie pour n'émettre une alarme qu'avec une probabilité d'alarme Pa correspondant à une proportion de fausses alarmes Pfa imposée.

Lors de l'émission d'une alarme, une étape de maintenance du dispositif embarqué doit être mise en oeuvre par la compagnie aérienne afin d'éviter une panne dudit dispositif embarqué.

Probabilité d'alarme

Par probabilité d'alarme, on entend la probabilité qu'une alarme soit émise au cours du procédé de surveillance alors que le dispositif embarqué est sain, c'est-à-dire, sans dégradation avérée. Autrement dit, une probabilité d'alarme Pa de 1% correspond à l'émission d'une alarme pour 100 vols sans dégradation.

En pratique, la probabilité d'alarme Pa n'est pas directement connue. En effet, les cahiers des charges des compagnies aériennes imposent comme critère une probabilité d'erreur Pe qui correspond à la probabilité que le dispositif embarqué soit sain alors qu'une alarme est émise. Autrement dit, une probabilité d'erreur Pe de 1% correspond à un dispositif embarqué sain pour 100 alarmes émises.

En pratique, lorsqu'une alarme est émise par le procédé de surveillance, une opération de maintenance est mise en oeuvre par la compagnie aérienne. Une limitation de la probabilité d'erreur Pe permet ainsi aux compagnies aériennes de limiter le nombre d'opérations de maintenance d'un dispositif embarqué qui est sain, de telles opérations engendrant des coûts d'exploitation inutiles.

De manière préférée, la probabilité d'alarme Pa est déterminée en fonction de la probabilité d'erreur Pe grâce à la formule de probabilité conditionnelle (F1) ci-dessous.

$$(\text{F1}) \quad Pa = \frac{\text{Pe}}{(1 - \text{Pe})} \cdot (1 - \beta)_{\text{a priori}} \cdot \frac{Pd}{(1 - Pd)}$$

La formule (F1) comporte les paramètres suivants :

- $\beta$ correspond à la probabilité de non-détection d'une dégradation pour un vol donné, 1-$\beta$ correspondant alors à la probabilité de détection d'une dégradation ; et
- Pd correspond à la probabilité d'une dégradation pour un vol donné.

La formule (F1) se déduit des équations de probabilité conditionnelle dans lesquelles la probabilité Pa correspond à une alarme sachant le dispositif sain (Pa = P(*Alarme|Sain*)) et la probabilité Pe correspond à un dispositif sain sachant qu'une alarme est émise (Pe = *P(Sain|Alarme)*).

$$P(Sain \mid Alarme) = \frac{P(Alarme \cap Sain)}{P(Alarme)} = \frac{P(Alarme \cap Sain)}{P(Sain)} \cdot \frac{P(Sain)}{P(Alarme)}$$

$$= P(Alarme \mid Sain) \cdot \frac{P(Sain)}{P(Alarme)} = Pa \cdot \frac{P(Sain)}{P(Alarme)}$$

Autrement dit

$$P(Alarme) = Pa \cdot \frac{P(Sain)}{P(Sain \mid Alarme)} = Pa \cdot \frac{(1 - Pd)}{Pe}$$

En outre, comme

$$P(Alarme) = P(Alarme \cap Sain) + P(Alarme \cap Dégradé)$$

$$P(Alarme) = P(Alarme \mid Sain).P(Sain) + P(Alarme \mid Dégradé).P(Dégradé)$$

Avec

$$P(Dégradé) = Pd$$

$$P(Sain) = 1 - Pd$$

$$P(Alarme \mid Dégradé) = 1 - \beta$$

$$P(Alarme|Sain) = Pa$$

$$P(Sain|Alarme) = Pe$$

$$P(Alarme) = P(Alarme|Sain).P(Sain) + P(Alarme|Dégradé).P(Dégradé)$$

$$P(Alarme) = Pa \cdot (1 - Pd) + (1 - \beta) \cdot Pd$$

$$P(Alarme) = Pa \cdot (1 - Pd) + (1 - \beta) \cdot Pd$$

Grâce aux deux égalités relatives à P(*Alarme*), on en déduit alors (F1).

Dans la formule (F1), la probabilité d'une dégradation pour un vol donné Pd est connue par expérimentation ou estimation et peut, par exemple, être de l'ordre de $10^{-7}$. La probabilité de détection d'une dégradation $(1-\beta)_{a\ priori}$ est fixée « a priori » à 1 et affinée par itération comme cela sera détaillé par la suite afin d'améliorer la précision du seuil de décision.

A titre d'exemple, on obtient classiquement une probabilité d'alarme Pa de l'ordre de 5.10E-8 pour une probabilité d'erreur Pe exigée de l'ordre de 5%, une probabilité de détection d'une dégradation $(1-\beta)_{a\ priori}$ de l'ordre de 1 et une probabilité d'une dégradation pour un vol Pd de l'ordre de $10^{-6}$.

*Score d'anormalité discret et loi de probabilité discrète*

Dans la présente méthode on détermine un longueur de séquence d'observation, constituée sur l'exemple d'un nombre n d'incréments de comptage et un seuil ks sur le nombre k d'apparitions d'anomalies, correspondant dans l'exemple à des transitions indésirables, au cours d'une séquence, pour déclencher l'alarme. La longueur d'une séquence d'observation peut correspondre à un vol ou à plusieurs vols consécutifs. Le score d'anormalité sur une séquence est défini comme le nombre k d'occurrences d'anomalies.

Cependant, on ne détermine plus, comme dans les exemples cités, un seuil sur la valeur du score d'anormalité supposé continu. Le procédé fait référence à une loi de probabilité discrète pour représenter les occurrences d'anomalies et évaluer le seuil ks à partir duquel on peut déclencher une alarme en respectant une probabilité d'alarme Pa.

Dans un premier exemple de mode de réalisation, on utilise une loi de probabilité représentée par une distribution binomiale.

La loi binomiale de paramètres n et p correspond au fait de renouveler sur une séquence n fois de manière indépendante le tirage d'un évènement qui a une probabilité p de se produire et une probabilité (1-p) de ne pas se produire. On compte alors le nombre d'apparition de l'évènement, ici une anomalie, et on appelle X la variable aléatoire indiquant ce nombre d'apparitions sur la séquence de n tirages.

La probabilité que la variable aléatoire X prenne une valeur k entre 0 et n sur la séquence est alors donnée par la distribution binomiale :

$$P(X=k) = \begin{bmatrix} n \\ k \end{bmatrix} p^k \cdot (1-p)^{n-k}$$

La fonction de répartition de la loi de la binomiale $F_{n,\ p}$ fournit la probabilité que la variable aléatoire X prenne une valeur inférieure ou égale à k pour une séquence de n tirages.

La valeur $F_{n,\ p}(k)$ de la fonction de répartition de la loi de la binomiale en X=k peut aussi s'exprimer en utilisant une fonction de répartition eulérienne Béta de la probabilité d'occurrence p par tirage et de paramètres k+1 et n-k.

Cette loi de probabilité convient bien au cas décrit pour lequel le comptage des anomalies éventuelles est fait à intervalles réguliers de durée unitaire, fournis par les « top horloge » du système de surveillance au cours d'un vol.

Dans un deuxième exemple de mode de réalisation, on utilise une loi de probabilité de Poisson.

La loi de Poisson de paramètre $(\lambda.\ t)$ correspond au comportement du nombre d'anomalies se produisant dans une séquence d'observation dont la longueur est le temps t, si ces anomalies se produisent avec une fréquence moyenne $\lambda$ connue et indépendamment du temps écoulé entre deux apparitions d'anomalies. Cette fréquence correspond à une probabilité d'occurrence par unité de temps.

La probabilité qu'il existe k occurrences de l'anomalie sur une séquence d'observation de durée est alors donnée, dans le cas où t est un multiple de l'incrément de temps pour lequel la fréquence λ est exprimée, par :

$$P(X=k) = \exp(-\lambda t) \cdot \frac{(\lambda \cdot t)^k}{k!}$$

La fonction de répartition de la loi de Poisson $F_{\lambda.t}$ fournit la probabilité que la variable aléatoire X prenne une valeur inférieure ou égale à k pour une séquence de longueur t.

La valeur $F_{\lambda.t}$ (k) de fonction de répartition de la loi de Poisson en X=k peut aussi s'exprimer par une fonction de répartition eulérienne Gamma de la fréquence λ.t d'occurrence sur la durée t, ayant pour paramètres k+1 et t.

La loi de Poisson constitue un passage à la limite de la loi binomiale lorsque le nombre de tirages est très grand. Elle convient donc également au cas décrit lorsque le nombre « tops horloge » est très grand. Elle convient également au cas d'un dispositif dont le système de surveillance ne signalerait les anomalies que lorsqu'elles interviennent, c'est-à-dire à des intervalles irréguliers. Dans ce cas, la loi de Poisson permet d'effectuer les calculs sur un intervalle de temps qui n'est pas un multiple d'incréments entre comptages successifs.

Exemple d'un premier mode de réalisation du procédé

Le procédé va maintenant être décrit en utilisant la loi binomiale, le système de surveillance indiquant un résultat binaire d'occurrence d'anomalie ou non pour des incréments de temps réguliers.

En référence à la figure 2, le procédé commence par une première étape E1 d'extraction d'une pluralité de scores d'anomalies pour une pluralité de vols sans dégradation avec le dispositif surveillé.

En particulier, cette étape E1 permet de créer au moins une séquence de référence constituée d'un grand nombre de vols sans dégradation, qui correspond à un très grand nombre m d'incréments de temps de détection de l'indicateur d'anomalies pour un dispositif sans dégradation, et de constituer un score d'anormalité r sur cette séquence de référence, égal à la somme des occurrences d'anomalies.

Sur l'exemple correspondant à la surveillance d'un dispositif décrite par la demande de brevet sous le numéro 1358593, illustré sur la figure 1, les résultats ont été observés pour 750 vols sans dégradation, chaque vol comprenant 1200 incréments de temps en phase transitoire, correspondant à la durée pendant laquelle le dispositif est sollicité. Cela permet de bâtir une séquence de référence de longueur m, m étant égal à 750 x 1200 = 90 000 incréments de temps, pour laquelle a été constaté un score r d'anormalité, r étant égal à 1+18=19.

Une deuxième étape E2 du procédé, avant de commencer la surveillance, consiste à chercher une estimation $\hat{p}$ de la probabilité p d'occurrence d'une anomalie à chaque incrément de temps, en utilisant la séquence de référence.

L'estimation $\hat{p}$ est obtenue en prenant un majorant $\hat{p}_\alpha$ de p avec un degré de confiance a. Sa valeur est obtenue par les formules :

$$\hat{p}_\alpha = \{p \mid 1 - F_{m,p}(r) = \alpha\} = B_{r+1,m-r}^{-1}(\alpha)$$

$F_{m,p}$ est la fonction de répartition binomiale de paramètres m et p, où m est le nombre d'incréments de temps de la séquence de référence et p une probabilité d'occurrence, appliquée au score d'anormalité r constaté pour la séquence de référence.

$B_{r+1,m-r}^{-1}$, qui est la fonction de répartition eulérienne Béta inverse de paramètres r+1 et m-r permet de calculer directement l'estimation $\hat{p}_\alpha$ avec un degré de confiance $\alpha$.

Pour le procédé il est ainsi possible d'utiliser $\alpha$ = 90 % ou $\alpha$ = 50 %. Il est également possible d'utiliser une valeur $\alpha$ = 44 % qui correspond au maximum de vraisemblance. Dans ce cas, l'estimation $\hat{p}_\alpha$ est directement fournie par le rapport r/m.

Avec les valeurs de la séquence de surveillance fournie en exemple sur la figure 1, de longueur m= 90 000 incréments avec un score d'anormalité r = 19, on obtient : $\hat{p}_{90\%}$= 2,88 $10^{-5}$, $\hat{p}_{50\%}$ = 2,19 $10^{-5}$ et l'estimé du maximum de vraisemblance, $\hat{p}_{ML} = \frac{r}{m} \approx \hat{p}_{44\%}$=2,11 $10^{-5}$.

Le procédé comprend ensuite une troisième étape E3 dans laquelle on détermine le seuil ks sur le nombre k d'occurrences d'anomalies dans une séquence d'observation de longueur n incréments de temps, pour lequel il peut être considéré que la probabilité d'occurrence d'anomalies est supérieure à l'estimation $\hat{p}$ de la probabilité d'occurrence d'anomalies pour un dispositif sans dégradation, faite dans l'étape E2 précédente à partir de la séquence de référence, avec une probabilité de se tromper égale à la valeur Pa définie par la formule F1.

Pour cela, le seuil ks de détection de dégradation sur le nombre k d'occurrences d'anomalies au cours d'une séquence d'observation de n incréments est déterminé de telle sorte que ks soit le plus petit entier pour lequel la fonction de répartition de la loi de probabilité sur une séquence d'observation, c'est-à-dire tel la probabilité qu'il y ait k anomalies pour tout k inférieur à ks sur cette séquence, se rapproche de l'unité à moins que la probabilité d'alarme donnée Pa.

Cela se traduit par la formule :

$$(\text{F2}) \qquad ks = \text{Inf}\{k \,|\, 1 - F_{n,\hat{p}}(k-1) \leq Pa\} = \text{Inf}\{k \,|\, B_{k,\,n-k+1}(\hat{p}) \leq Pa\}$$

où $F_{n,\hat{p}}$ est la fonction de répartition binomiale de paramètres, le nombre d'incréments n choisis pour la séquence d'observation et l'estimation $\hat{p}$ de la probabilité d'occurrence de l'anomalie à chaque incrément pour un dispositif sans dégradation, obtenue lors de l'étape E2 précédente.

$B_{k,\,n-k+1}$ est la fonction de répartition eulérienne Béta de paramètres k et n-k+1, appliquée à l'estimation $\hat{p}$ de la probabilité d'occurrence.

Autrement dit, ks est le nombre d'occurrences d'une anomalie parmi les n incréments de temps de la séquence d'observation à partir duquel l'hypothèse que la vraie probabilité p par incrément de temps des occurrences d'anomalies soit égale à l'estimation $\hat{p}$ n'est pas tenable avec une probabilité plus grande que Pa. Donc, si k est supérieur ou égal à ks, on peut en conclure que la probabilité p par incrément de temps des occurrences d'anomalies a dépassé l'estimation $\hat{p}$ pour un dispositif sans dégradation avec une probabilité de se tromper inférieure à Pa.

Le choix du nombre n d'incréments pour une séquence d'observation est le résultat d'un compromis. Ce nombre ne doit pas être trop petit cela entraîne alors une valeur de ks trop faible et une trop grande imprécision sur la probabilité d'alarme respectée. A l'inverse, ce nombre ne doit pas être trop grand car il y alors un risque de laisser se développer une dégradation du dispositif surveillé.

Le choix de la longueur n de la séquence d'observation peut être fait à partir de la connaissance du dispositif, par des simulations avant de mettre en oeuvre le procédé dans le calculateur embarqué. Dans une variante du procédé, une étape supplémentaire peut être implémentée pour affiner la longueur de la séquence d'observation en fonction des valeurs du seuil ks calculé à l'étape E3, de manière, par exemple à ce que ce seuil prenne une valeur entre quelques unités et dix.

Dans la pratique, pour la surveillance des dispositifs visés par les applications aéronautiques, la longueur n d'incréments de la séquence d'observation correspond à quelques vols successifs, le nombre nv de vol se situant de préférence entre trois et dix.

Pour le dispositif déjà cité pour illustration, une séquence d'observation de cinq vols successif correspond à n= 5 x 1200 = 6000 incréments d'observation. En retenant la valeur objectif de $5.10^{-8}$ pour la probabilité d'alarme Pa, l'application de la formule F2 aboutit à une valeur de ks égale à six. (ks = 6)

Le procédé comprend donc ensuite une étape E4 de surveillance du dispositif en opération qui suit des séquences d'observations successives de n incréments, par exemple lors d'un nombre nv de vols successifs. Dans cette étape E4, une alarme E5 est déclenchée si le nombre d'occurrences d'anomalies atteint la valeur ks au cours d'une séquence d'observation.

Exemple d'un deuxième mode de réalisation du procédé

Dans ce deuxième mode de réalisation on utilise une loi de Poisson, le système de surveillance indiquant un résultat binaire d'anomalie ou non pour des incréments de temps réguliers, comme dans le premier mode.

La première étape E1 d'extraction d'une pluralité de scores d'anomalies pour une pluralité de vols sans dégradation avec le dispositif surveillé est ici identique à celle mise en oeuvre dans le premier mode. Ici, la séquence de référence de m incréments de temps a une durée égale à tc. Les incréments étant de durée unitaire égale sur l'exemple, la durée tc de la séquence peut être comptée en nombre d'incréments.

La deuxième étape E2 du procédé, avant de commencer la surveillance, consiste à chercher une estimation $\hat{\lambda}$ d'une fréquence moyenne $\lambda$ d'occurrence d'une anomalie à chaque incrément de temps, en utilisant la séquence de référence.

L'estimation $\hat{\lambda}$ est obtenue en prenant un majorant $\hat{\lambda}_{\alpha}$ de $\lambda$ avec un degré de confiance $\alpha$.

$$\hat{\lambda}_{\alpha} = \text{Sup}\{\lambda \,|\, 1 - F_{\lambda \cdot t_c}(r) \leq \alpha\} = \Gamma^{-1}_{r+1, t_c}(\alpha)$$

Sa valeur est obtenue par les formules :

$F_{\lambda \cdot tc}$ est la fonction de répartition de Poisson de paramètre $\lambda$ fois tc, où tc est la durée de la séquence de référence

et $\lambda$ une probabilité d'occurrence par incrément de temps de durée unitaire,

appliquée au score d'anormalité r constaté pour la séquence de référence.

$\Gamma_{r+1,t_c}^{-1}$ , qui est la fonction de répartition eulérienne Gamma inverse de paramètres r+1 et tc, permet de calculer directement l'estimation $\hat{\lambda}\alpha$ pour un degré de confiance $\alpha$.

Il est également possible, dans une variante, d'évaluer l'estimation $\hat{\lambda}\alpha$ par la valeur de $\dfrac{\chi^2_{2\cdot r+2}{}^{-1}(\alpha)}{2.t_c}$, où $\chi^2_{2\cdot r+2}{}^{-1}$ est la fonction de répartition inverse du chi deux à 2r+2 degrés de libertés.

Pour cette mise en oeuvre du procédé, il est ainsi possible d'utiliser, comme dans le premier mode de réalisation, $\alpha$ = 90 %, $\alpha$ = 50 % ou $\alpha$ = 44 % qui correspond au maximum de vraisemblance.

Avec les valeurs de la séquence de surveillance fournie en exemple sur la figure 1, de longueur tc = 90 000, comptée en incréments de temps, avec un score d'anormalité r = 19, on obtient : $\hat{\lambda}_{90\,\%}$= 2,88 10⁻⁵, $\hat{\lambda}_{50\,\%}$= 2,19 10⁻⁵ et l'estimé du maximum de vraisemblance, $\hat{\lambda}_{ML} = \dfrac{r}{t_c} \approx \hat{\lambda}_{44\,\%}$=2,11 10⁻⁵.

Dans la troisième étape E3 de ce mode de réalisation du procédé on détermine le seuil ks sur le nombre d'occurrences k d'anomalies dans une séquence d'observation de durée t, pour lequel il peut être considéré que la probabilité d'occurrence d'anomalies est supérieure à l'estimation $\hat{\lambda}$ de la probabilité d'occurrence d'anomalies pour un dispositif sans dégradation à partir de la séquence de référence, avec une probabilité de se tromper égale à la valeur Pa définie par la formule F1.

Pour cela, le seuil ks de détection sur le nombre k d'occurrences d'anomalies durant la durée t d'une séquence d'observation est déterminé, de manière semblable à celle du premier mode de réalisation, comme étant le plus petit entier tel que la fonction de répartition de la loi de probabilité sur une séquence d'observation se rapproche de l'unité à moins que la probabilité d'alarme donnée Pa.

Cela se traduit par la formule :

$$(\text{F3}) \quad ks = \text{Inf}\{k\,|1 - F_{n,\hat{\lambda}\cdot t}(k-1) \le Pa\} = \text{Inf}\{k\,|\Gamma_{k,\ t}(\hat{\lambda}) \le Pa\} = \text{Inf}\{k\,|\chi^2_{2\cdot k}(2\cdot\hat{\lambda}\cdot t) \le Pa\}$$

où $F_{n,\hat{\lambda}\cdot t}$ est la fonction de répartition de Poisson de paramètre $\hat{\lambda}.t$ égal au produit de la durée t choisie pour la séquence d'observation et de l'estimation $\hat{\lambda}$ de la fréquence d'occurrence d'anomalies à chaque incrément de temps pour un dispositif sans dégradation, obtenue lors de l'étape précédente.

$\Gamma_{k,t}$ est la fonction de répartition eulérienne Gamma de paramètres, le nombre k d'occurrences d'anomalies sur la séquence d'observation et la durée t de la séquence d'observation.

Dans une alternative préférentielle, on peut utiliser la fonction de répartition du $\chi^2$ à 2k degrés de libertés $\chi^2_{2\cdot k}$ pour estimer ks dans la formule F3.

Les même arguments que dans le premier mode de réalisation permettent de conclure que si k est supérieur ou égal à ks, la fréquence moyenne $\lambda$ d'occurrence d'une anomalie à chaque incrément a dépassé l'estimation $\hat{\lambda}$ pour un dispositif sans dégradation avec une probabilité de se tromper inférieure à Pa.

Le choix du nombre n d'incréments pour une séquence d'observation est fait de la même façon que dans le premier mode de réalisation décrit. Dans la pratique, pour la surveillance des dispositifs visés par les applications aéronautiques, la longueur de la séquence d'observation correspond à un quelques vols successifs, leur nombre n se situant de préférence entre trois et dix.

Pour l'exemple déjà cité en illustration, une séquence d'observation de cinq vols successifs correspond à une durée t égale à 6000 incréments d'observation. En retenant la valeur objectif de 5.10⁻⁸ pour la probabilité d'alarme Pa, l'application de la formule F3 aboutit à une valeur de ks égale à six. (ks = 6)

La similitude des résultats obtenus dans les deux modes de réalisation est en accord avec le fait que les deux lois de probabilité utilisées sont équivalentes sur un très grand nombre d'incréments.

Variante utilisant une stratégie de confirmation de p dépassements du seuil pour g séquences

Les deux précédents modes de réalisation ont été présentés pour l'émission d'une alarme dès qu'un seuil a été dépassé sur une séquence. En variante, une stratégie de confirmation « S parmi N » peut être appliquée à ces modes de réalisation, indépendamment de la loi de probabilité discrète utilisée pour retrouver le score d'anormalité r sur une séquence.

Dans cette stratégie, une alarme est émise si le nombre d'occurrences d'anomalies dépasse S fois le seuil ks pour N séquences consécutives. Par contre, la valeur du seuil ks correspond ici à une estimation Peac de la probabilité d'alarme élémentaire sur une séquence répétée N fois, pour observer S fois le dépassement de seuil avec un dispositif non dégradé ayant une probabilité d'alarme Pa par séquence.

Pour ce faire, on peut considérer le nombre k d'occurrences d'une anomalie par séquence comme une variable aléatoire à partir d'une distribution de Bernoulli, en prenant les séquences comme incréments. Dans ce cas, Peac peut être estimé grâce à la formule suivante :

$$(F4) \qquad Peac = B_{S,N-S+1}^{-1}\ (Pa)$$

dans laquelle N est le nombre de séquences d'observation, S le nombre minimum de fois où le seuil ks aura été dépassé de manière répétée pour confirmer la persistance d'un signal de détection, et $B_{S,N-S+1}^{-1}$ la fonction de répartition eulérienne Béta inverse de paramètres S et N-S+1. Si N et S valent tous deux un, on retrouve Peac = Pa.

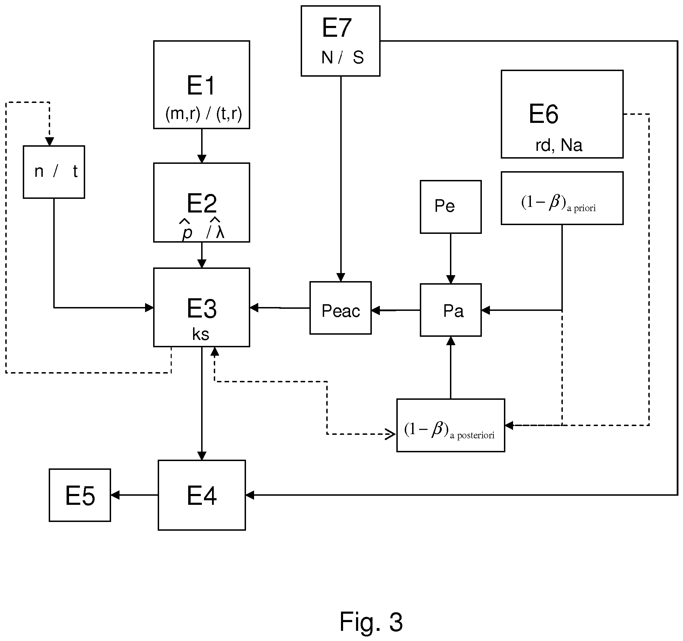

Dans cette variante, en référence à la figure 3, le procédé comprend une étape E7, correspondant au choix de N et S pour calculer la valeur Peac qui sera utilisée à la place de Pa dans l'étape E3 pour calculer le seuil ks en vue de respecter la probabilité d'alarme Pa avec la stratégie de confirmation, puis dans l'étape E4, dans laquelle on émet une alarme après avoir S fois observé un dépassement du seuil dans N séquences successives.

Plus les valeurs de N et S choisies dans l'étape E7 sont élevées, plus le seuil de détection pour confirmation par p dépassements parmi q sera fiable. En revanche le phénomène de dégradation avant panne devra être d'autant plus lent pour être détecté à temps. Le choix de N repose donc sur des considérations opérationnelles de délai de dépose et de dynamique de dégradation physique jusqu'à panne. Une fois choisi N, S peut l'être à son tour pour maximiser la probabilité de détection. Par ailleurs, généralement, un séquence correspondra à un vol.

Affinage de la valeur du seuil de décision

Il a été précédemment présenté une détermination du seuil de décision dans lequel la probabilité d'alarme Pa est connue ou estimée à partir de la probabilité d'erreur Pe. Lorsque la probabilité d'alarme Pa est estimée, on peut mettre en oeuvre de manière optionnelle une étape d'affinage du seuil de décision S par affinage de la probabilité de détection d'une dégradation (1-$\beta$) comme illustré sur les diagrammes schématiques des figures 2 et 3.

Comme illustré à la figure 2, dans une étape d'évaluation E6, on met en oeuvre le procédé de surveillance avec le seuil de décision ks tel que précédemment déterminé pour une pluralité de séquences d'observation obtenus lors de vols avec dégradation, de préférence, obtenus par simulation. Au cours du procédé de surveillance, les scores d'anormalité rd obtenus sur les séquences d'observation sont comparés au seuil de décision ks ce qui permet de déduire « a posteriori » la probabilité de détection d'une dégradation (1-$\beta$). En effet, il suffit d'observer le nombre d'alarmes Na émises par rapport au nombre de séquences d'observation correspondant aux vols avec dégradation surveillées.

Comme illustré à la figure 2, par itération, on remplace dans les étapes de détermination du seuil de décision la valeur (1-$\beta$)$_{a\ priori}$ par la valeur (1-$\beta$)$_{a\ posteriori}$ obtenue au cours de l'affinage afin d'obtenir une nouvelle valeur du seuil de décision S plus précise. L'étape d'affinage peut être itérée afin de converger vers la valeur du seuil de décision S la plus précise.

Dans une mise en oeuvre de l'invention, le procédé de surveillance d'une dégradation d'un dispositif embarqué d'un aéronef, la méthode de détermination automatique d'un seuil de décision et le procédé de génération de dégradations sont mis en oeuvre par un calculateur, de préférence, par une pluralité de processeurs du calculateur.

A titre d'exemple, le procédé de surveillance est mis en oeuvre pour surveiller une chaîne de mesure sur le turboréacteur.

Le processeur de détermination du seuil de décision reçoit une pluralité de scores d'anormalité sans dégradation du processeur de surveillance et détermine, pour une probabilité d'erreur donnée Pe et une probabilité de détection « a priori » d'une dégradation par le procédé de surveillance, le seuil de décision ks. Une fois le seuil de décision ks déterminé, celui-ci est transmis au processeur de surveillance qui peut alors comparer les scores d'anormalité calculés sur les séquences d'observation de même durée (n, t) que celle utilisée dans le procédé de surveillance audit seuil de décision ks pour surveiller l'évolution de la dégradation de la chaîne de mesure sur le turboréacteur.

Pour affiner la valeur du seuil de décision ks, le processeur de génération de dégradations simule des données de vol dégradées qui sont soumises au processeur de surveillance qui émet un certain nombre d'alarmes en fonction des données reçues ce qui permet d'en déduire « a posteriori » la probabilité de détection d'une dégradation par le procédé de surveillance. Cette valeur est alors communiquée au processeur de détermination du seuil de décision ks$_l$ qui fournit une nouvelle valeur de seuil de décision ks pour la nouvelle probabilité de détection obtenue.

On itère le processus jusqu'à obtenir une convergence de la valeur du seuil de décision ks. En pratique, une convergence satisfaisante est obtenue à partir de deux itérations.

L'invention a été présentée pour une chaîne de mesure sur le turboréacteur mais elle s'applique à tout dispositif embarqué d'un aéronef.

## Revendications

1. Procédé de surveillance d'une dégradation d'un dispositif embarqué d'un aéronef au cours de son fonctionnement, mis en oeuvre par un calculateur, le degré de la dégradation du dispositif embarqué étant défini par un score d'anormalité formé par le comptage d'occurrences d'anomalies constatées par un système de contrôle du dispositif au cours de son fonctionnement, le procédé de surveillance comprenant une étape de comparaison d'un score d'anormalité obtenu pour une séquence d'observation de longueur (n, t) donnée à un seuil de décision (ks) et une étape d'émission d'une alarme en cas d'atteinte ou dépassement du seuil de décision (ks), le seuil de décision (ks) étant déterminé automatiquement pour une probabilité d'alarme donnée Pa, correspondant à la probabilité qu'une alarme soit émise au cours du procédé de surveillance alors que le dispositif embarqué est sain, au moyen des étapes suivantes :

   - une étape d'obtention d'un score d'anormalité (r) sur au moins une séquence de référence correspondant à des vols de l'aéronef sans dégradation et de longueur (m, tc) égale à une pluralité de longueurs (n, t) de séquences d'observation ;
   - une étape d'ajustement d'une loi de probabilité discrète permettant de retrouver le score d'anormalité (r) obtenu sur la séquence de référence;
   - une étape de calcul du seuil de décision (ks) tel, qu'en appliquant la loi de probabilité discrète ajustée lors de l'étape précédente à une séquence d'observation ayant la longueur donnée (n), la probabilité qu'un score d'anomalie supérieur ou égal au seuil de décision (ks) se produise un nombre S de fois pour N séquences consécutives soit inférieure à une probabilité élémentaire Peac de dépassement de seuil évaluée à partir de la probabilité d'alarme donnée Pa, N et S pouvant être égaux à un,
   la probabilité élémentaire Peac de dépassement de seuil, évaluée à partir de la probabilité d'alarme Pa, étant donnée par la formule :

   $$\text{Peac} = B_{S,N-S+1}^{-1} \, (\text{Pa})$$

   dans laquelle N est le nombre de séquences d'observation, S le nombre de fois où le seuil ks aura été dépassé pour N séquences successives, et $B_{S,N-S+1}^{-1}$ la fonction de répartition eulérienne Béta inverse de paramètres S et N-S+1.

2. Procédé selon la revendication 1 , **caractérisé en ce que** la loi de probabilité discrète représente un phénomène dont les occurrences ont une probabilité (p, λ) par unité de temps, la deuxième étape correspondant à une estimation ($\hat{p}$, $\hat{\lambda}$) de la probabilité (p, λ) par unité de temps dans la loi de probabilité discrète pour retrouver le score d'anormalité (r) obtenu sur la séquence de référence.

3. Procédé selon la revendication 2, dans lequel la loi de probabilité discrète est une loi binomiale ou une loi de Poisson, paramétrée par une probabilité par unité de temps et une longueur de séquence.

4. Procédé selon l'une des revendications 2 à 3, pour lequel l'estimation ($\hat{p}$, $\hat{\lambda}$) de la probabilité (p, λ) par unité de temps des occurrences d'anomalies pour le système sans dégradation dans la loi de probabilité discrète est égale à un majorant de cette probabilité par unité de temps avec une confiance donnée (α) pour le score d'anormalité (r) dans la séquence de référence.

5. Procédé selon l'une des revendications 2 à 3, pour lequel l'estimation ($\hat{p}$, $\hat{\lambda}$) de la probabilité (p, λ) par unité de temps des occurrences d'anomalies pour le système sans dégradation est égale au maximum de vraisemblance de la probabilité (p, λ) par unité de correspondant au score d'anormalité obtenu sur la séquence de référence.

6. Procédé selon l'une des revendications 1 à 5, pour lequel la longueur (n, t) d'une séquence d'observation est définie en nombre (n) d'incréments d'observation de durée unitaire.

**7.** Procédé selon l'une des revendications 1 à 6, pour lequel une séquence d'observation correspond à plusieurs vols successifs de l'aéronef.

**8.** Procédé selon l'une des revendications 1 à 7, comprenant une étape de prédétermination de la longueur (n, t) des séquences d'observation.

**9.** Procédé selon l'une des revendications 1 à 8, dans lequel la probabilité d'alarme Pa est obtenue par la formule suivante :

$$Pa = \frac{Pe}{(1 - Pe)} \cdot (1 - \beta)_{\text{a priori}} \cdot \frac{Pd}{(1 - Pd)}$$

dans laquelle :

Pe correspond à la probabilité que le dispositif embarqué soit sain alors qu'une alarme est émise ;
Pd correspond à la probabilité d'une dégradation pour une séquence d'observation donnée ; et
$(1-\beta)_{\text{a priori}}$ correspond à la probabilité de détection d'une dégradation a priori.

**10.** Procédé selon la revendication 9 comprenant :

- une étape de mise en oeuvre du procédé de surveillance d'une dégradation du dispositif embarqué, avec le seuil de décision (ks) préalablement déterminé, pour une pluralité de scores d'anormalité formés pour une pluralité de séquences d'observation avec dégradation pour en déduire une probabilité de détection d'une dégradation a posteriori $(1-\beta)_{\text{a posteriori}}$,
- une étape de détermination d'une nouvelle probabilité d'alarme Pa en fonction de la probabilité de détection d'une dégradation a posteriori $(1-\beta)_{\text{a posteriori}}$,
- une étape de détermination d'un nouveau seuil de décision (ks) affiné à partir de la nouvelle probabilité d'alarme.

**Patentansprüche**

**1.** Verfahren zur Überwachung einer Verschlechterung einer Vorrichtung an Bord eines Flugzeugs während seines Betriebs, das von einem Rechner ausgeführt wird, wobei der Grad der Verschlechterung der Bordvorrichtung durch einen Abnormitätswert definiert wird, der durch das Zählen von Ereignissen von Anomalien gebildet wird, die von einem Steuersystem der Vorrichtung während ihres Betriebs festgestellt werden, wobei das Verfahren zur Überwachung einen Schritt des Vergleichens eines , für eine Beobachtungssequenz einer gegebenen Länge (n, t) erhaltenen Abnormitätswerts mit einem Entscheidungsgrenzwert (ks) und eine Schritt der Ausgabe eines Alarms bei Erreichen oder Überschreiten des Entscheidungsgrenzwerts (ks) umfasst, wobei der Entscheidungsgrenzwert (ks) für eine gegebene Alarmwahrscheinlichkeit Pa, die der Wahrscheinlichkeit entspricht, dass während des Verfahrens zur Überwachung ein Alarm ausgegeben wird, obwohl die Bordvorrichtung intakt ist, unter Anwendung der folgenden Schritte automatisch bestimmt wird:

- einen Schritt des Erhaltens eines Abnormitätswerts (r) für mindestens eine Referenzsequenz, die Flügen des Flugzeugs ohne Verschlechterung und einer Länge (m, tc) entspricht, die einer Vielzahl von Längen (n, t) von Beobachtungssequenzen gleich ist;
- einen Schritt des Anpassens eines diskreten Wahrscheinlichkeitsgesetzes, das es ermöglicht, den Abnormitätswert (r) zu finden, der auf der Referenzsequenz erhalten wird;
- einen Schritt des Berechnens des Entscheidungsgrenzwertes (ks) derart, dass bei Anwenden des im vorhergehenden Schritt angepassten diskreten Wahrscheinlichkeitsgesetzes auf eine Beobachtungssequenz mit der gegebenen Länge (n) die Wahrscheinlichkeit, dass ein Anomaliewert größer oder gleich dem Entscheidungsgrenzwert (ks) eine Anzahl S von Malen für N aufeinanderfolgende Sequenzen auftritt, kleiner ist als eine elementare Wahrscheinlichkeit Peac der Grenzwertüberschreitung, die aus der gegebenen Alarmwahrscheinlichkeit Pa bewertet wird, wobei N und S gleich eins sein können, wobei die elementare Wahrscheinlichkeit Peac der Grenzwertüberschreitung, bewertet aus der Alarmwahrscheinlichkeit Pa, durch die folgende Formel gegeben ist:

$$Peac = B_{S,N-S+1}^{-1}(Pa)$$

wobei N die Anzahl von Beobachtungssequenzen, S die Anzahl der Überschreitungen des Schwellenwerts ks für N aufeinanderfolgende Sequenzen ist, und $B_{S,N-S+1}^{-1}$ die Eulersche Beta-inverse Verteilungsfunktion der Parameter S und N - S + 1 ist.

**2.** Verfahren nach Anspruch 1, **dadurch gekennzeichnet, dass** das diskrete Wahrscheinlichkeitsgesetz ein Phänomen darstellt, dessen Ereignisse eine Wahrscheinlichkeit (p, λ) pro Zeiteinheit aufweisen, wobei der zweite Schritt einer Schätzung $(\hat{p}, \hat{\lambda})$ der Wahrscheinlichkeit (p, λ) pro Zeiteinheit im diskreten Wahrscheinlichkeitsgesetz entspricht, um den auf der Referenzsequenz erhaltenen Abnormitätswert (r) zu finden.

**3.** Verfahren nach Anspruch 2, wobei das diskrete Wahrscheinlichkeitsgesetz ein Binomialgesetz oder ein Poisson'sches Gesetz ist, parametrisiert durch eine Wahrscheinlichkeit pro Zeiteinheit und eine Sequenzlänge.

**4.** Verfahren nach einem der Ansprüche 2 bis 3, wobei die Schätzung $(\hat{p}, \hat{\lambda})$ der Wahrscheinlichkeit (p, λ) pro Zeiteinheit der Anomalieereignisse für das System ohne Verschlechterung im diskreten Wahrscheinlichkeitsgesetz gleich einem Höchstwert dieser Wahrscheinlichkeit pro Zeiteinheit mit einer gegebenen Konfidenz (α) für den Abnormitätswert (r) in der Referenzsequenz ist.

**5.** Verfahren nach einem der Ansprüche 2 bis 3, wobei die Schätzung $(\hat{p}, \hat{\lambda})$ der Wahrscheinlichkeit (p, λ) pro Zeiteinheit der Anomalieereignisse für das System ohne Verschlechterung gleich der maximalen Plausibilität der Wahrscheinlichkeit (p, λ) pro Einheit ist, die dem auf der Referenzsequenz erhaltenen Abnormitätswert entspricht.

**6.** Verfahren nach einem der Ansprüche 1 bis 5, wobei die Länge (n, t) einer Beobachtungssequenz als die Anzahl (n) von Beobachtungsinkrementen einheitlicher Dauer definiert ist.

**7.** Verfahren nach einem der Ansprüche 1 bis 6, wobei eine Beobachtungssequenz mehreren aufeinanderfolgenden Flügen des Flugzeugs entspricht.

**8.** Verfahren nach einem der Ansprüche 1 bis 7, umfassend einen Schritt des Vorbestimmens der Länge (n, t) der Beobachtungssequenzen.

**9.** Verfahren nach einem der Ansprüche 1 bis 8, wobei die Alarmwahrscheinlichkeit Pa durch die folgende Formel erhalten wird:

$$Pa = \frac{Pe}{(1-Pe)} \cdot (1-\beta)_{a\,priori} \cdot \frac{Pd}{(1-Pd)}$$

wobei:

Pe der Wahrscheinlichkeit entspricht, dass die Bordvorrichtung intakt ist, obwohl ein Alarm ausgelöst wird;
Pd der Wahrscheinlichkeit einer Verschlechterung für eine gegebene Beobachtungsequenz entspricht; und
$(1 - \beta)_{a\,priori}$ der Wahrscheinlichkeit einer A-priori-Erfassung einer Verschlechterung entspricht.

**10.** Verfahren nach Anspruch 9, umfassend:

- einen Schritt des Ausführens des Verfahrens zur Überwachung einer Verschlechterung der Bordvorrichtung, wobei der Entscheidungsgrenzwert (ks) vorher bestimmt wurde, für eine Vielzahl von Abnormitätswerten, die für eine Vielzahl von Beobachtungssequenzen mit Verschlechterung gebildet wurden, um daraus eine Wahrscheinlichkeit einer A-posteriori-Erfassung einer Verschlechterung $(1 - \beta)_{a\,posteriori}$ abzuleiten,
- einen Schritt des Bestimmens einer neuen Alarmwahrscheinlichkeit Pa in Abhängigkeit von der Wahrscheinlichkeit der A-posteriori-Erfassung einer Verschlechterung $(1 - \beta)_{a\,posteriori}$,
- einen Schritt des Bestimmens eines neuen Entscheidungsgrenzwertes (ks), der aus der neuen Alarmwahrscheinlichkeit herausgearbeitet wurde.

**Claims**

1. Method for monitoring a degradation of a device on board an aircraft during the operation thereof, implemented by a computer, the degree of the degradation of the onboard device being defined by an abnormality score formed by the counting of occurrences of anomalies observed by a control system of the device during the operation thereof, the monitoring method comprising a step of comparing an abnormality score obtained for an observation sequence of a given length (n, t) with a decision threshold (ks) and a step of emitting an alarm in case the decision threshold (ks) is reached or exceeded, the decision threshold (ks) being automatically determined for a given alarm probability Pa, corresponding to the probability that an alarm is emitted in the course of the monitoring method although the onboard device is healthy, by means of the following steps:

   - a step of obtaining an abnormality score (r) on at least one reference sequence corresponding to flights of the aircraft without degradation and of length (m, tc) equal to a plurality of lengths (n, t) of observation sequences;
   - a step of adjusting a discrete probability law making it possible to retrieve the abnormality score (r) obtained on the reference sequence;
   - a step of calculating the decision threshold (ks) such that by applying the discrete probability law adjusted during the previous step to an observation sequence having the given length (n), the probability that an anomaly score greater than or equal to the decision threshold (ks) will occur a number of S times for N successive sequences is less than an elementary probability Peac of exceeding the threshold evaluated from the given probability Pa, N and S being able to be equal to one, the elementary probability Peac of exceeding the threshold evaluated on the basis of the alarm probability Pa being given by the formula:

$$Peac = B_{S,N-S+1}^{-1} (Pa)$$

   wherein N is the number of observation sequences, S the number of times the threshold will have been exceeded of N successive sequences and $B_{S,N-S+1}^{-1}$ is the inverse Euler beta distribution function of parameters S and N-S+1.

2. Method according to claim 1, **characterised in that** the discrete probability law represents a phenomenon, the occurrences of which have a probability (p, λ) per unit of time, the second step being an estimation ($\hat{p}$, $\hat{λ}$) of the probability (p, λ) per unit of time in the discrete probability law to determine the abnormality score (r) obtained with the reference sequence.

3. Method according to claim 2 wherein the discrete probability law is a binomial distribution or a Poisson distribution set by a probability per unit of time and a sequence length.

4. Method according to one of claims 2 to 3, for which the estimation ($\hat{p}$, $\hat{λ}$) of the probability (p, λ) per unit of time of the occurrences of anomalies for the system without degradation in the discrete probability law is equal to a majorant of this probability per unit of time with a given confidence value (α) for the abnormality score (r) in the reference sequence.

5. Method according to one of claims 2 to 3, for which the estimation ($\hat{p}$, $\hat{λ}$) of the probability (p, λ) per unit of time of the occurrences of anomalies for the system without degradation is equal to the maximum likelihood estimation of the probability (p, λ) per unit of time corresponding with the abnormality score obtained on the reference sequence.

6. Method according to one of claims 1 to 5, for which the length (n, t) of an observation sequence is defined as the number (n) of observation increments of a time unit.

7. Method according to one of claims 1 to 6, for which the observation sequence corresponds to several successive flights of the aircraft.

8. Method according to one of claims 1 to 7, comprising a predetermination step of the length (n, t) of the observation sequences.

9. Method according to one of claims 1 to 8, wherein the alarm probability Pa is obtained with the following formula:

$$Pa \quad = \frac{Pe}{(1-Pe)} \cdot (1-\beta)_{a\ priori} \cdot \frac{Pd}{(1-Pd)}$$

wherein:

Pe corresponds to the probability that the onboard device is healthy when an alarm is emitted;
Pd corresponds to the probability of a degradation for a given observation sequence; and
$(1-\beta)_{a\ priori}$ is the probability of the a priori detection of a degradation.

10. Method according to claim 9 comprising:

- a step of implementation of the monitoring method of a degradation of the onboard device, with a decision threshold (ks) determined beforehand, for a plurality of abnormality scores formed for a plurality of observation sequences with degradation to deduce a probability of a posteriori detection of a degradation $(1-\beta)_{a\ posteriori}$,
- a step of determining a new alarm probability Pa as a function of the probability of a posteriori detection of a degradation $(1-\beta)_{a\ posteriori}$,
- a step of determining a new decision threshold (ks) adjusted based on the new probability of alarm.

Fig. 1

Fig. 2

Fig. 3

## RÉFÉRENCES CITÉES DANS LA DESCRIPTION

**Documents brevets cités dans la description**

- FR 1358593
- FR 2980266
- WO 1358593 A